# EUROPÄISCHE PATENTSCHRIFT

(11) **EP 2 882 160 B1**
(45) Veröffentlichungstag und Bekanntmachung des Hinweises auf die Patenterteilung: **05.02.2020**
(21) Anmeldenummer: 14196530.1
(22) Anmeldetag: 05.12.2014
(51) Int. Cl.: H04L 12/58, H04L 12/64, H04L 12/24, H04W 4/16, H04L 29/08, H04M 3/42, H04W 12/06, H04L 12/66, H04W 4/14, H04L 29/06, H04W 88/16

(54) **STEUERUNG VON DIENSTMERKMALEN VON MOBILFUNKTEILNEHMERN IN MOBILFUNKNETZEN ZUR VERFÜGUNG GESTELLTEN DIENSTEN**
CONTROL OF SERVICE CHARACTERISTICS OF SERVICES THAT ARE PROVIDED TO MOBILE PARTICIPANTS IN MOBILE RADIO NETWORKS
COMMANDE DE CARACTÉRISTIQUES DE SERVICE POUR DES SERVICES FOURNIS À DES ABONNÉS RADIO MOBILE DANS DES RÉSEAUX RADIO MOBILES

(30) Priorität: 06.12.2013 DE 102013113586
(43) Veröffentlichungstag der Anmeldung: 10.06.2015
(73) Patentinhaber: Vodafone Holding GmbH, 40549 Düsseldorf (DE)
(72) Erfinder: Quack, Holger, 41199 Mönchengladbach (DE); Willimowski, Ingo, 47475 Kamp-Lintfort (DE)
(74) Vertreter: Ring & Weisbrodt

(56) Entgegenhaltungen:
- EP-A1- 2 224 760
- GB-A- 2 439 365
- US-A1- 2006 258 394
- US-A1- 2011 117 910
- 3GPP TS 24.623 V12.2.0, 20. September 2013 (2013-09-20), XP002738018,

## Beschreibung

Die vorliegende Erfindung betrifft ein Verfahren zur Steuerung von Dienstmerkmalen von Mobilfunkteilnehmern in Mobilfunknetzen zur Verfügung gestellten Diensten.

Gegenstand der vorliegenden Erfindung ist ferner eine Netzübergangseinrichtung (SMS Application Gateway) eines Mobilfunknetzes.

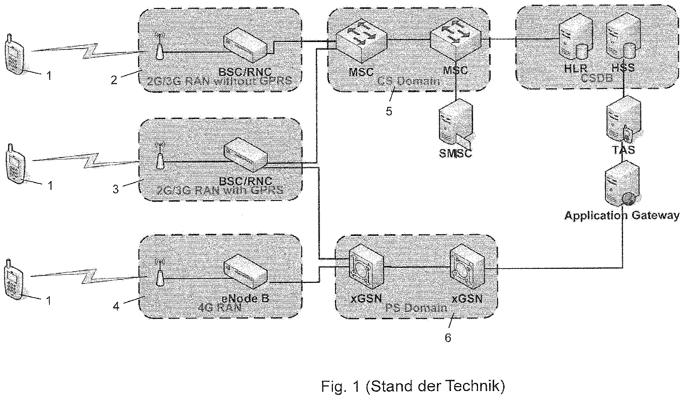

In Mobilfunknetzen werden Mobilfunkteilnehmern zu Kommunikationszwecken unterschiedliche Dienste zur Verfügung gestellt bzw. angeboten. Für eine Dienstnutzung verwenden Mobilfunkteilnehmer Endgeräte, beispielsweise Mobilfunktelefone, die für einen Zugang zum Mobilfunknetz ein Teilnehmeridentifikationsmodul, ein sogenanntes SIM (SIM: Subscriber Identity Module) nutzen. In Mobilfunknetzen können Endgeräte dabei über unterschiedliche Zugangsnetze, sogenannte RANs (RAN: Radio Access Network), Zugang zu den Diensten bekommen. In den Zugangsnetzen können Verbindungen und/oder Übertragungen leitungsvermittelnd - auch Circuit Switched oder CS genannt - und/oder paketvermittelnd - auch Packet Switched oder PS genannt - erfolgen. Dabei kann zwischen folgenden Typen von Zugangsnetzen (RANs) bei Mobilfunknetzen unterschieden werden (siehe auch Fig. 1):
- 2G/3G RAN ohne GPRS (GPRS: General Packet Radio Service);
- 2G/3G RAN mit GPRS;
- 4G RAN.

Ein Zugangsnetz 2G/3G RAN ohne GPRS ermöglicht nur reine CS-Verbindungen. Ein Zugangsnetz 2G/3G RAN mit GPRS ermöglicht sowohl CS- als auch PS-Verbindungen. Ein Zugangsnetz 4G RAN, wie beispielsweise eine Mobilfunknetz gemäß einem LTE-Funknetzstandard (LTE: Long Term Evolution), ermöglicht nur PS-Verbindungen.

Die den Mobilfunkteilnehmern in Mobilfunknetzen angebotenen Dienste weisen teilweise als weitere Dienste bzw. Zusatzdienste teilnehmerbezogene und/oder teilnehmerspezifische Leistungsmerkmale bzw. Dienstmerkmale - sogenannte Supplementary Services - auf, die über den einfachen Verbindungsaufbau zwischen Teilnehmern hinausgehen, beispielsweise Rufumleitungen, Anklopfen, Rufnummernanzeige oder dergleichen teilnehmerspezifische Einstellungen ermöglichende Zusatzdienste.

In einem 2G/3G RAN erfolgt eine Sprachübertragung zwischen Mobilfunkteilnehmern über die CS-Domain, also über CS-Verbindungen. Die Daten über die Einstellungen der Zusatzdienste (Supplementary Services) werden im sogenannten HLR (HLR: Home Location Register) gehalten.

In einem 4G RAN gemäß einem LTE-Funknetzstandard erfolgt bei VoLTE (VoLTE: Voice over LTE) eine Sprachübertragung zwischen Mobilfunkteilnehmern über die PS-Domain, also über PS-Verbindungen. Die Daten über die Einstellungen der Zusatzdienste (Supplementary Services) werden im sogenannten TAS (TAS: Telephony Application Server) gehalten und von dort mit den Einstellungen im sogenannten HSS (HSS: Home Subscriber Server) synchronisiert.

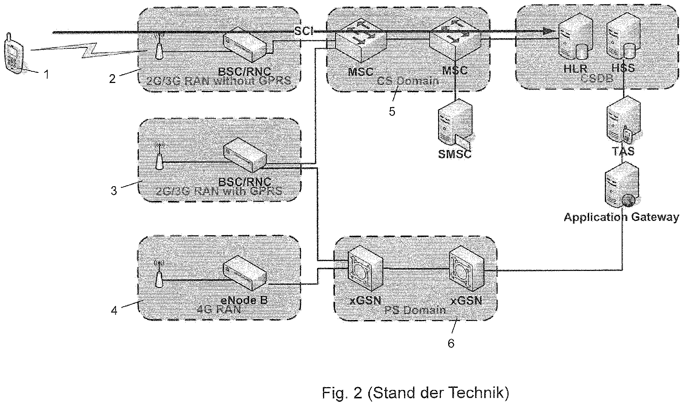

Die Befehle bzw. Kommandos zur Steuerung und/oder Abfrage von Dienstmerkmalen von Mobilfunkteilnehmern in Mobilfunknetzen erfolgt dabei in Abhängigkeit des jeweiligen Zugangsnetzes in welchem das Endgerät des jeweiligen Teilnehmers in dem Mobilfunknetz eingebucht ist, insbesondere wie folgt:
Bei einem 2G/3G RAN ohne GPRS werden Steuerungskommandos für Dienstmerkmale von Diensten als SCI (SCI: Subscriber Controlled Input) über die CS-Domain des Mobilfunknetzes zum HLR übertragen (siehe auch Fig. 2). Gemäß 3GPP-Spezifikationen soll dies in allen 2G/3G-Mobilfunknetzen vorgesehen sein.

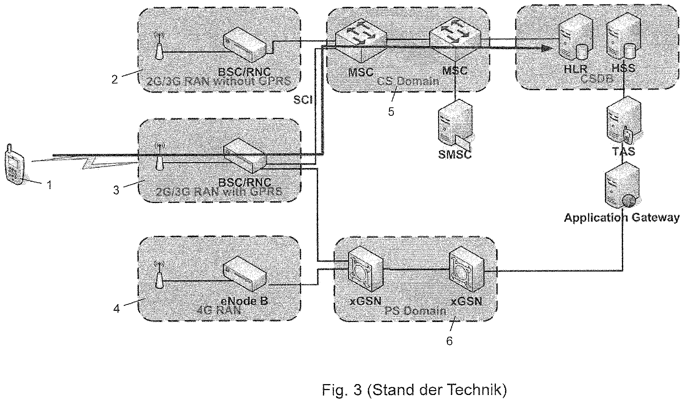

Bei einem 2G/3G RAN mit GPRS werden Steuerungskommandos für Dienstmerkmale von Diensten ebenfalls als SCI über die CS-Domain des Mobilfunknetzes zum HLR übertragen (siehe auch Fig. 3). Die PS-Domain des Mobilfunknetzes (2G/3G RAN mit GPRS) wird für diesen Anwendungsfall nicht benutzt.

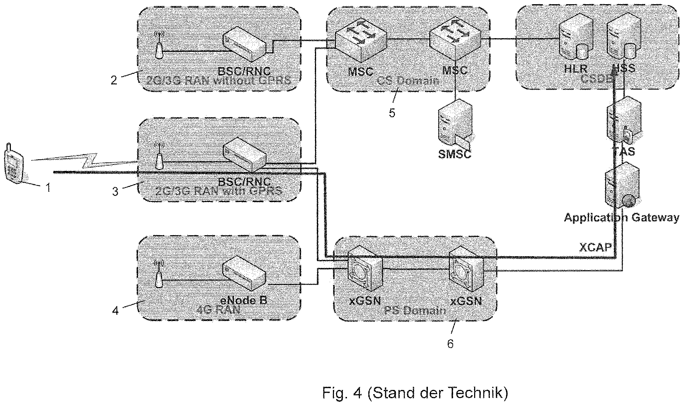

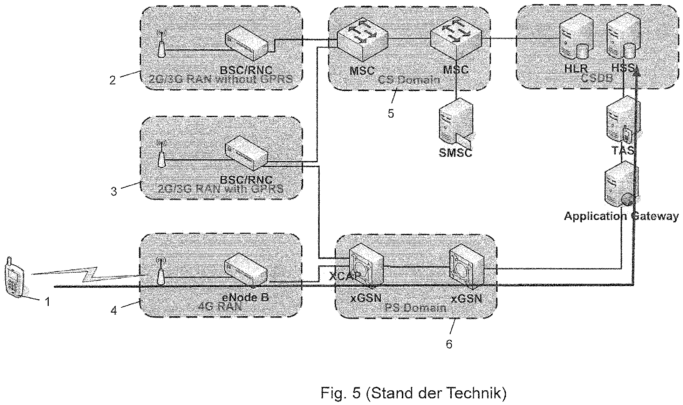

Die Übermittlung von Steuerungskommandos für Dienstmerkmale von Diensten erfolgt bei VoLTE über XCAP-Nachrichten (XCAP: XML Configuration Access Protocol; XML: Extensible Markup Language). Gemäß 3GPP-Standard erfolgt eine Übertragung von XCAP-Nachrichten bei 2G/3G RAN mit GPRS und 4G RAN über die PS-Domain. Bei Aufenthalt in einem 2G/3G RAN mit GPRS ist es damit möglich, aus dem 2G/3G RAN heraus eine XCAP-Nachricht über die PS-Domain des Mobilfunknetzes an den TAS und/oder HSS zu übermitteln, insbesondere um Einstellungen von Zusatzdiensten für VoLTE-Mobilfunkteilnehmer vornehmen zu können (siehe auch Fig. 4). Gleiches gilt bei einem reinen LTE-Anwendungsfall, bei dem das 4G RAN genutzt wird. Für VoLTE-Teilnehmer werden gemäß den 3GPP-Spezifikationen dann XCAP-Nachrichten für die Übermittlung von Steuerungskommandos für Dienstmerkmale von Diensten genutzt und diese über die PS-Domain an den TAS oder HSS übergeben (siehe auch Fig. 5). Die CS-Domain des Mobilfunknetzes wird für diesen Anwendungsfall nicht genutzt.

Ist ein Mobilfunkteilnehmer in einem Mobilfunknetz mit einem Zugangsnetz eingebucht, welches dem Mobilfunkteilnehmer keine Paketdatenvermittlung (PS-Domain) zur Verfügung stellt, dann ist es dem Mobilfunkteilnehmer bisher nicht möglich, eine Einstellung von Zusatzdiensten von Diensten vorzunehmen, welche dem Mobilfunkteilnehmer in einem Mobilfunknetz mit paketvermittelndem Zugangsnetz zur Verfügung gestellt werden. Dies ist insbesondere der Fall bei einer Änderung der Einstellungen der Zusatzdienste für VoLTE-Mobilfunkeilnehmer und kann beispielsweise bei einem sogenannten Roaming vorkommen, bei dem sich ein VoLTE-Mobilfunkteilnehmer in einem ausländischen Mobilfunknetz befindet, insbesondere wenn in einem solchen Fall keine Paketdatenvermittlung in das Heimatnetz des VoLTE-Mobilfunkteilnehmers möglich oder zulässig ist.

Die US 2011/0117910 A1 offenbart ein Verfahren und eine Vorrichtung zum Bereitstellen eines Roaming-Dienstes in einem drahtlosen Kommunikationssystem, wobei ein Roaming-Gateway zum Durchführen der Kommunikation zwischen einem IP Multimedia Subsystem (IMS)-Netzwerk und einem leitungsvermittelten Netzwerk eine Authentifizierungsanforderung für eine sich vom IMS-Netzwerk zu dem leitungsvermittelten Netzwerk bewegende Roaming-Mobilstation empfängt, Authentifizierungsinformationen für die Roaming-Mobilstation und Dienstinformationen für Dienste, mit denen die Roaming-Mobilstation seitens des IMS-Netzwerks versorgt wurde, erfasst, prüft, ob die Roaming-Mobilstation berechtigt ist, die Dienste gemäß den Dienstinformationen unter Verwendung der Authentifizierungsinformationen und der Dienstinformationen zu nutzen, und sendet eine Authentifizierungserfolgsmeldung an ein MSC des leitungsvermittelten Netzwerks, falls die Roaming-Mobilstation berechtigt ist, die Dienste zu nutzen.

Die EP 2 224 760 A1 offenbart eine Netzwerkeinheit, ein Verfahren und ein System zum Bereitstellen von zusätzlichen Diensten für ein mobiles Gerät während eines Roamings. Dabei umfasst die Netzwerkeinheit einen Empfänger, einen Konverter und einen Ausgang, wobei der Empfänger zum Empfangen einer ersten Nachricht von einer mobilen Vorrichtung, die von einem ersten Netzwerk als Roaming-Dienst bereitgestellt wird, ausgebildet ist, wobei die erste Nachricht in einem vom ersten Netzwerk unterstützten Transportprotokoll enthalten ist und darin eine Aufrufnachricht zum Aufruf mindestens eines von einem zweiten Netzwerk angebotenen zusätzlichen Dienstes eingebettet ist. Der Konverter dient zum Extrahieren der Aufrufmeldung aus der ersten Meldung und der Ausgang dient zum Senden der Aufrufnachricht an das zweite Netzwerk unter Verwendung eines Protokolls, das vom zweiten Netzwerk zum Aufrufen zusätzlicher Dienste verwendet wird.

Die US 2006/0258394 A1 offenbart eine Vorrichtung umfassend: mindestens ein erstes Netzwerk eines vorbestimmten Typs und mindestens ein zweites Netzwerk eines vorbestimmten Typs; mindestens ein mobiles Endgerät, das zwischen dem ersten und dem zweiten Netzwerk beweglich ist; mindestens ein Gateway, das operativ mit dem ersten als auch dem zweiten Netzwerke gekoppelt ist; und mindestens eine Nachricht, die über das Gateway mindestens Merkmalsdaten des mobilen Endgeräts von dem ersten oder zweiten Netzwerk an das andere erste oder zweite Netzwerke kommuniziert.

In Anbetracht dieses Standes der Technik liegt der vorliegenden Erfindung die Aufgabe zugrunde, einem Mobilfunkteilnehmer eine Steuerung von Dienstmerkmalen von ihm in Mobilfunknetzen mit Paketdatenvermittlung zur Verfügung gestellten Diensten, insbesondere VoLTE-Mobilfunkteilnehmern zur Verfügung gestellten Dienstmerkmalen, zu ermöglichen, auch wenn der Mobilfunkteilnehmer in einem Mobilfunknetz mit einem Zugangsnetz eingebucht ist, welches keine Paketdatenvermittlung in das Heimatnetz des Mobilfunkteilnehmers ermöglicht bzw. zulässt.

Zur technischen Lösung wird mit der vorliegenden Erfindung ein Verfahren zur Steuerung von Dienstmerkmalen von Mobilfunkteilnehmern in Mobilfunknetzen zur Verfügung gestellten Diensten vorgeschlagen, umfassend die folgenden Verfahrensschritte:
a) Empfangen einer ersten Kurznachricht - SMS - von einem Mobilfunkteilnehmer in einer ersten Netzübergangseinrichtung in Form eines SMS Application Gateways eines keine Paketdatenvermittlung ermöglichenden Mobilfunknetzes, wobei die Kurznachricht - SMS - den Mobilfunkteilnehmer identifizierende Daten und Informationen zur Steuerung eines Dienstmerkmals eines dem Mobilfunkteilnehmer in einem Mobilfunknetz mit einem nur paketvermittelnden Zugangsnetz zur Verfügung gestellten Dienstes aufweist;
b) Erzeugen oder Umsetzen eines Kommandos zur Steuerung des Dienstmerkmals des in dem Mobilfunknetz mit dem nur paketvermittelnden Zugangsnetz zur Verfügung gestellten Dienstes aus und/oder mit den Steuerungsinformationen der empfangenen Kurznachricht - SMS - seitens der ersten Netzübergangseinrichtung in Form des SMS Application Gateways des keine Paketdatenvermittlung ermöglichenden Mobilfunknetzes;
c) Übermitteln der den Mobilfunkteilnehmer identifizierenden Daten und des erzeugten oder umgesetzten Steuerungskommandos von der ersten Netzübergangseinrichtung in Form des SMS Application Gateways des keine Paketdatenvermittlung ermöglichenden Mobilfunknetzes an eine zweite Netzübergangseinrichtung in Form eines Application Gateways des Mobilfunknetzes mit dem nur paketvermittelnden Zugangsnetz;
d) Autorisieren des Mobilfunkteilnehmers gegenüber einer Einrichtung (TAS, HSS) des Mobilfunknetzes mit dem nur paketvermittelnden Zugangsnetz seitens der zweiten Netzübergangseinrichtung in Form des Application Gateways des Mobilfunknetzes mit dem nur paketvermittelnden Zugangsnetz mittels der den Mobilfunkteilnehmer identifizierenden Daten; und
e) Ausführen des Steuerungskommandos seitens der Einrichtung (TAS, HSS) des Mobilfunknetzes mit dem nur paketvermittelnden Zugangsnetz mittels der zweiten Netzübergangseinrichtung in Form des Application Gateways des Mobilfunknetzes mit dem nur paketvermittelnden Zugangsnetz bei erfolgreicher Autorisierung,
wobei die in der seitens der ersten Netzübergangseinrichtung in Form des SMS Application Gateways des keine Paketdatenvermittlung ermöglichenden Mobilfunknetzes empfangenen Kurznachricht - SMS - enthaltenen Informationen zur Steuerung des Dienstmerkmals des dem Mobilfunkteilnehmer in einem Mobilfunknetz mit dem nur paketvermittelnden Zugangsnetz zur Verfügung gestellten Dienstes subscriber controlled input-kodierte, SCI-kodierte, Informationen sind.

Erfindungsgemäß ist vorgesehen, dass ein Mobilfunkteilnehmer, welcher mit seinem mobilen Endgerät in einem Mobilfunknetz mit einem Zugangsnetz eingebucht ist, welches dem Mobilfunkteilnehmer keine Paketdatenvermittlung über die PS-Domain zur Verfügung stellt, zur Steuerung von Dienstmerkmalen von dem Mobilfunkteilnehmer in Mobilfunknetzen mit Paketdatenvermittlung zur Verfügung gestellten Diensten von seinem Endgerät aus eine Kurznachricht (SMS) mittels eines Kurznachrichtendienstes (SMS) des Mobilfunknetzes an eine Netzübergangseinrichtung (SMS Application Gateway) des Mobilfunknetzes sendet. In der Kurznachricht sind dabei Informationen zur Steuerung eines Dienstmerkmals des dem Mobilfunkteilnehmer in dem Mobilfunknetz mit einem paketvermittelnden Zugangsnetz zur Verfügung gestellten Dienstes enthalten. Die Netzübergangseinrichtung (SMS Application Gateway) des Mobilfunknetzes setzt die in der Kurznachricht (SMS) enthaltenen Steuerungsinformationen in ein Steuerungskommando um, welches von einer Netzübergangseinrichtung (Application Gateway) des Mobilfunknetzes mit einem paketvermittelnden Zugangsnetz verarbeitbar ist. Die Erfindung macht dabei von der Erkenntnis Gebrauch, dass in allen Mobilfunknetzen die Möglichkeit des Versendens von Kurzmitteilungen (SMS) mittels eines Kurmitteilungsdienstes (SMS) des Mobilfunknetzes ermöglicht ist und stellt vorteilhafterweise über eine Netzübergangseinrichtung (SMS Application Gateway) für Kurznachrichten (SMS) eine Schnittstelle bereit, über welche auch bei Einbuchung in einem Mobilfunknetz, welches dem Mobilfunkteilnehmer keine Paketdatenvermittlung über eine PS-Domain zur Verfügung stellt, eine Steuerung von Dienstmerkmalen von Diensten in einem Mobilfunknetz mit einem paketvermittelnden Zugangsnetz ermöglicht wird.

Eine vorteilhafte Ausgestaltung der Erfindung ist gekennzeichnet durch ein Steuerungskommando, welches
- ein Auslesen von Daten über aktuelle Einstellungen von Dienstmerkmalen aus der Einrichtung (TAS, HSS) des Mobilfunknetzes mit einem paketvermittelnden Zugangsnetz durch die Netzübergangseinrichtung (Application Gateway) des Mobilfunknetzes mit einem paketvermittelnden Zugangsnetz,
- ein Übermitteln der ausgelesenen Daten von der Netzübergangseinrichtung (Application Gateway) des Mobilfunknetzes mit einem paketvermittelnden Zugangsnetz an die Netzübergangseinrichtung (SMS Application Gateway) des Mobilfunknetzes,
- ein Erzeugen bzw. Umsetzen einer Kurznachricht (SMS) an den Mobilfunkteilnehmer aus den ausgelesenen Daten seitens der Netzübergangseinrichtung (SMS Application Gateway) des Mobilfunknetzes, und
- ein Senden der erzeugten bzw. umgesetzten Kurznachricht (SMS) von der Netzübergangseinrichtung (SMS Application Gateway) an den Mobilfunkteilnehmer
bewirkt. Vorteilhafterweise ist so eine Statusabfrage der Einstellungen von Zusatzdiensten bzw. der Dienstmerkmale von Diensten ermöglicht, auch wenn sich der Mobilfunkteilnehmer gerade nicht mit einem paketvermittelnden Zugangsnetz in ein Mobilfunknetz eingebucht hat oder ihm in dem eingebuchten Mobilfunknetz keine Paketdatenvermittlung zur Verfügung steht. Eine vorteilhafte Ausgestaltung der Erfindung sieht vor, dass das Auslesen und Übermitteln der Daten mittels bzw. als XCAP-Nachricht erfolgt.

Erfindungsgemäß ist vorgesehen, dass die in der seitens der Netzübergangseinrichtung (SMS Application Gateway) des Mobilfunknetzes empfangenen Kurznachricht (SMS) enthaltenen Informationen zur Steuerung eines Dienstmerkmals eines dem Mobilfunkteilnehmer in einem Mobilfunknetz mit einem paketvermittelnden Zugangsnetz zur Verfügung gestellten Dienstes kodierte Informationen, nach Art von SCI, sind.

Eine besonders vorteilhafte Ausgestaltung der Erfindung ist dadurch gekennzeichnet, dass aus und/oder mit der seitens der Netzübergangseinrichtung (SMS Application Gateway) des Mobilfunknetzes empfangenen Kurznachricht (SMS) seitens der Netzübergangseinrichtung (SMS Application Gateway) des Mobilfunknetzes eine XCAP-Nachricht erzeugt wird, bzw. aus und/oder mit einer seitens der Netzübergangseinrichtung (SMS Application Gateway) des Mobilfunknetzes empfangenen XCAP-Nachricht seitens der Netzübergangseinrichtung (SMS Application Gateway) des Mobilfunknetzes eine Kurznachricht (SMS) erzeugt wird.

Zur technischen Lösung der eingangs genannten Aufgabe wird mit der vorliegenden Erfindung ferner eine erste Netzübergangseinrichtung in Form eines SMS Application Gateways in einem keine Paketdatenvermittlung ermöglichenden Mobilfunknetz vorgeschlagen, umfassend
- Mittel zum Empfangen einer Kurznachricht - SMS - von einem Mobilfunkteilnehmer, wobei die Kurznachricht - SMS - den Mobilfunkteilnehmer identifizierende Daten und Informationen zur Steuerung eines Dienstmerkmals eines dem Mobilfunkteilnehmer in einem Mobilfunknetz mit einem nur paketvermittelnden Zugangsnetz zur Verfügung gestellten Dienstes aufweist,
- Mittel zum Erzeugen oder Umsetzen eines Kommandos zur Steuerung des Dienstmerkmals des in dem Mobilfunknetz mit dem nur paketvermittelnden Zugangsnetz zur Verfügung gestellten Dienstes aus und/oder mit den Steuerungsinformationen der empfangenen Kurznachricht - SMS -, und
- Mittel zum Übermitteln der den Mobilfunkteilnehmer identifizierenden Daten und des erzeugten oder umgesetzten Steuerungskommandos an eine zweite Netzübergangseinrichtung in Form eines Application Gateways des Mobilfunknetzes mit dem nur paketvermittelnden Zugangsnetz,
wobei die in der seitens der ersten Netzübergangseinrichtung in Form des SMS Application Gateways des keine Paketdatenvermittlung ermöglichenden Mobilfunknetzes empfangenen Kurznachricht - SMS - enthaltenen Informationen zur Steuerung des Dienstmerkmals des dem Mobilfunkteilnehmer in einem Mobilfunknetz mit dem nur paketvermittelnden Zugangsnetz zur Verfügung gestellten Dienstes subscriber controlled input-kodierte, SCI-kodierte, Informationen sind.

Eine weitere vorteilhafte Ausgestaltung der Erfindung ist gekennzeichnet durch
- Mittel zum Empfangen von Daten von einer Netzübergangseinrichtung (Application Gateway) eines Mobilfunknetzes mit einem paketvermittelnden Zugangsnetz,
- Mittel zum Erzeugen bzw. Umsetzen einer Kurznachricht (SMS) an den Mobilfunkteilnehmer aus den von der Netzübergangseinrichtung (Application Gateway) des Mobilfunknetzes mit einem paketvermittelnden Zugangsnetz empfangenen Daten, und
- Mittel zum Senden der erzeugten bzw. umgesetzten Kurznachricht (SMS) an den Mobilfunkteilnehmer.

Vorteilhafterweise ist die erfindungsgemäße Netzübergangseinrichtung (SMS Application Gateway) gekennzeichnet durch Mittel zur Wandlung bzw. Umsetzung einer Kurznachricht (SMS) in eine XCAP-Nachricht bzw. zur Wandlung bzw. Umsetzung einer XCAP-Nachricht in eine Kurznachricht (SMS).

Die erfindungsgemäße Netzübergangseinrichtung (SMS Application Gateway) des Mobilfunknetzes ist vorteilhafterweise ausgebildet und/oder eingerichtet, die seitens derselben auszuführenden bzw. durchzuführenden Verfahrensschritte eines erfindungsgemäßes Verfahrens auszuführen bzw. durchzuführen.

Eine alternative Ausgestaltung der Erfindung sieht vor, dass statt einer Nutzung von Kurznachrichten (SMS) mit einem Kurznachrichtendienst (SMS) des Mobilfunknetzes und einer für Kurznachrichten vorgesehenen Netzübergangseinrichtung (SMS Application Gateway) USSD-Codes (USSD: Unstructured Supplementary Service Data) und dementsprechend ein USSD-Gateway zum Einsatz kommen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Darstellung ein vereinfachtes Ausführungsbeispiel eines Mobilfunknetzes gemäß dem Stand der Technik, mit drei Zugangsnetzen (vorliegend 2G/3G RAN ohne GPRS, 2G/3G RAN mit GPRS und 4G RAN) für Mobilfunkteilnehmer;
- Fig. 2: in einer schematischen Darstellung nach Fig. 1 ein Ausführungsbeispiel für eine gemäß dem Stand der Technik vorgesehene Übermittlung von Steuerungskommandos für Dienstmerkmale von Diensten bei einem 2G/3G RAN ohne GPRS mittels SCI über die CS-Domain des Mobilfunknetzes zum HLR;
- Fig. 3: in einer schematischen Darstellung nach Fig. 1 ein Ausführungsbeispiel für eine gemäß dem Stand der Technik vorgesehene Übermittlung von Steuerungskommandos für Dienstmerkmale von Diensten bei einem 2G/3G RAN mit GPRS mittels SCI über die CS-Domain des Mobilfunknetzes zum HLR;
- Fig. 4: in einer schematischen Darstellung nach Fig. 1 ein Ausführungsbeispiel für eine gemäß dem Stand der Technik vorgesehene Übermittlung von Steuerungskommandos für Dienstmerkmale von Diensten bei einem 2G/3G RAN mit GPRS mittels XCAP über die PS-Domain des Mobilfunknetzes zum TAS bzw. HSS;
- Fig. 5: in einer schematischen Darstellung nach Fig. 1 ein Ausführungsbeispiel für eine gemäß dem Stand der Technik vorgesehene Übermittlung von Steuerungskommandos für Dienstmerkmale von Diensten bei einem 4G RAN mittels XCAP über die PS-Domain des Mobilfunknetzes zum TAS bzw. HSS; und
- Fig. 6: in einer schematischen Darstellung ein Ausführungsbeispiel für eine erfindungsgemäß vorgesehene Übermittlung von Steuerungskommandos für Dienstmerkmale von Diensten in einem 4G RAN bei Aufenthalt des Mobilfunkteilnehmers in einem 2G/3G RAN ohne PS-Domain oder einem Mobilfunknetz ohne Paketdatenvermittlung für den Mobilfunkteilnehmer.

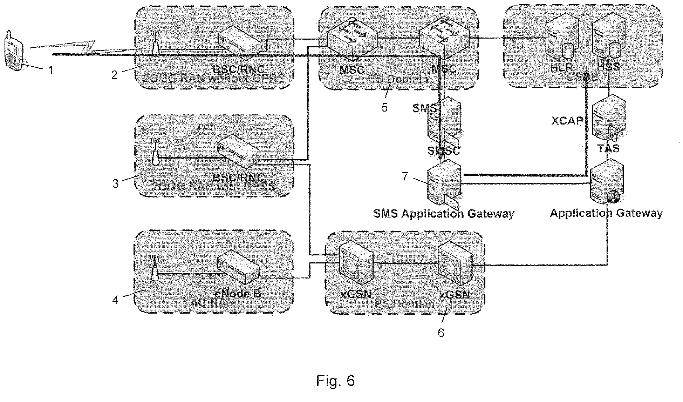

Fig. 6 zeigt ein Mobilfunknetz, welches entsprechend dem in Fig. 1 bis Fig. 5 gezeigtem Mobilfunknetz drei unterschiedliche Zugangsnetze, sogenannte RANs (RAN: Radio Access Network), für einen Zugang von Mobilfunkteilnehmern bzw. deren Endgeräten 1 zu den Diensten aufweist, vorliegend ein 2G/3G RAN ohne GPRS (mit dem Bezugszeichen 2 gekennzeichnet), ein 2G/3G RAN mit GPRS (mit dem Bezugszeichen 3 gekennzeichnet) und ein 4G RAN (mit dem Bezugszeichen 4 gekennzeichnet). In den Zugangsnetzen können Verbindungen und/oder Übertragungen leitungsvermittelnd über die CS-Domain 5 und/oder paketvermittelnd über die PS-Domain 6 erfolgen.

Das mit dem Bezugszeichen 2 gekennzeichnete Zugangsnetz 2G/3G RAN ohne GPRS des Mobilfunknetzes ermöglicht nur reine CS-Verbindungen über die CS-Domain 5. Das mit dem Bezugszeichen 3 gekennzeichnete Zugangsnetz 2G/3G RAN mit GPRS des Mobilfunknetzes ermöglicht sowohl CS-Verbindungen über die CS-Domain 5 als auch PS-Verbindungen über die PS-Domain 6. Das mit dem Bezugszeichen 4 gekennzeichnete Zugangsnetz 4G RAN gemäß einem LTE-Funknetzstandard ermöglicht nur PS-Verbindungen über die PS-Domain 6.

Die erfindungsgemäß vorgesehene Steuerung von Dienstmerkmalen von Mobilfunkteilnehmern in Mobilfunknetzen mit Paketdatenvermittlung zur Verfügung gestellten Diensten, wie VoLTE, kommt insbesondere dann vorteilhaft zum Einsatz, wenn die dazu erforderlichen Steuerungsinformationen zur Einstellung der Dienstmerkmale über ein nicht PS-fähiges Mobilfunknetz, wie einem 2G/3G RAN ohne GPRS (mit dem Bezugszeichen 2 gekennzeichnet), an das HSS übertragen werden müssen. Ein Anwendungsfall ist dabei insbesondere beim sogenannten Roaming gegeben, wenn sich beispielsweise ein VoLTE-Teilnehmer in ausländischen Mobilfunknetzen befindet bzw. aufhält, die keine Paketdatenübertragung zum Heimatnetz des VoLTE-Teilnehmers, also zu dem Mobilfunknetz in dem sich sein HSS befindet, zulassen. Da in diesem Fall keine PS-Domain 6 für die Übertragung von XCAP-Nachrichten zur Verfügung steht, und dementsprechend eine Steuerung der Dienstmerkmale nicht über XCAP-Nachrichten erfolgen kann, ist erfindungsgemäß das Versenden einer Kurznachricht SMS von dem Mobilfunkteilnehmer bzw. dessen Endgerät 1 an eine zur Verarbeitung von Kurznachrichten ausgebildeten und/oder eingerichteten Netzübergangseinrichtung SMS-Application Gateway 7 vorgesehen. In der von dem den Dienst VoLTE des 4G RAN 4 in Anspruch nehmenden Mobilfunkteilnehmers 1 gesendeten SMS an die Nummer der zu diesem Zwecke eingerichteten Netzübergangseinrichtung SMS-Application Gateways 7 sind die Kommandos zur Steuerung von teilnehmerspezifischen Einstellungen der Zusatzdienste enthalten. Die Kommandos sind dabei entweder per Klartext, wie beispielsweise "Unbedingte Rufumleitung auf 0172/1234567 Ein", oder mittels SCI oder einem an SCI angelehnten Code, wie beispielsweise "**21*01721234567#", i der Kurznachricht SMS enthalten. Das SMS Center (SMSC) stellt der Netzübergangseinrichtung SMS Application Gateway 7, welches über einen sogenannten Large Account an dieses angebunden sein kann, dann die Kurznachricht SMS zu.

Nach einer Authentisierung des sendenden Mobilfunkendgeräts 1 anhand dessen MSISDN (Mobile Subscriber ISDN Number) und einer Umsetzung der Kurznachricht SMS auf XCAP durch die Netzübergangseinrichtung SMS Application Gateway 7, werden die Steuerungskommandos für die teilnehmerspezifischen Einstellungen der Zusatzdienste (Dienstmerkmale) über das bereits vorhandene Application Gateway und den TAS an den HSS übermittelt.

Bei der Abfrage von Statusinformationen aus dem HSS mit einem entsprechenden Kommando werden die Einstellungen aus dem HSS ausgelesen und in einer Antwort-SMS dem Mobilfunkteilnehmer 1 zugestellt.

Fig. 6 zeigt damit quasi eine Übermittlung von XCAP Nachrichten in 2G/3GNetzen (ohne GPRS Fähigkeit) für VoLTE Mobilfunkteilnehmer mittels SMS.

In einer weiteren vorteilhaften Ausgestaltung der Erfindung ist vorgesehen, dass die seitens des CSDB entweder Synchronisationsmechanismen zwischen HLR und HSS greifen oder HLR und HSS eine gemeinsame Instanz bilden. In einer weiteren vorteilhaften Ausgestaltung der Erfindung ist das HSS Bestandteil einer TAS internen Datenbank. Eine weitere Ausgestaltung der Erfindung sieht vor, dass die Netzübergangseinrichtung das SMS Application Gateway 7 funktional ein Bestandteil der bereits vorhandenen Netzübergangseinrichtung Application Gateway ist.

Die in den Figuren der Zeichnung dargestellten Ausführungsbeispiele und die in Zusammenhang mit diesen beschriebenen Ausführungsbeispiele dienen lediglich der Erläuterung der Erfindung und sind für diese nicht beschränkend.

### Bezugszeichenliste/Abkürzungen:

- 1: Mobilfunkteilnehmer/Endgerät
- 2: 2G/3G RAN ohne GPRS
- 3: 2G/3G RAN mit GPRS
- 4: 4G RAN/LTE
- 5: leitungsvermittelnde Domain/CS-Domain
- 6: paketvermittelnde Domain/PS-Domain
- 7: Netzübergangseinrichtung für Kurznachrichten (SMS Application Gateway)
- 2G: Second Generation (GSM)
- 3G: Third Generation (UMTS)
- 4G: Fourth Generation (LTE)
- 3GPP: Third Generation Partnership Project
- BSC: Base Station Controller
- CS: Circuit Switched
- CSDB: Customer Services Data Base
- eNodeB: LTE Base Station
- GPRS: Generic Packet Radio Service
- GSM: Global System for Mobile Communication
- HLR: Home Location Register
- HSS: Home Subscriber Server
- LTE: Long Term Evolution
- MSC: Mobile Switching Center
- PS: Packet Switched
- RAN: Radio Access Network
- RNC: Radio Access Network controller
- SCI: Subscriber Controlled Input
- SMS: Short Message Service
- SMSC: Short Message Service Center
- TAS: Telephony Application Server
- XCAP: XML Configuration Access Protocol
- XML: Extensible Markup Language
- xGSN: GPRS Service Node
- UMTS: Universal Mobile Telecommunications System
- USSD: Unstructured Supplementary Service Data
- VoLTE: Voice over LTE

## Patentansprüche

1. Verfahren zur Steuerung von Dienstmerkmalen von Mobilfunkteilnehmern (1) in Mobilfunknetzen zur Verfügung gestellten Diensten,
umfassend die folgenden Verfahrensschritte:
a) Empfangen einer ersten Kurznachricht - SMS - von einem Mobilfunkteilnehmer (1) in einer ersten Netzübergangseinrichtung in Form eines SMS Application Gateways (7) eines keine Paketdatenvermittlung ermöglichenden Mobilfunknetzes, wobei die Kurznachricht - SMS - den Mobilfunkteilnehmer (1) identifizierende Daten und Informationen zur Steuerung eines Dienstmerkmals eines dem Mobilfunkteilnehmer (1) in einem Mobilfunknetz mit einem nur paketvermittelnden Zugangsnetz zur Verfügung gestellten Dienstes aufweist;
b) Erzeugen oder Umsetzen eines Kommandos zur Steuerung des Dienstmerkmals des in dem Mobilfunknetz mit dem nur paketvermittelnden Zugangsnetz zur Verfügung gestellten Dienstes aus und/oder mit den Steuerungsinformationen der empfangenen Kurznachricht - SMS - seitens der ersten Netzübergangseinrichtung in Form des SMS Application Gateways (7) des keine Paketdatenvermittlung ermöglichenden Mobilfunknetzes;
c) Übermitteln der den Mobilfunkteilnehmer identifizierenden Daten und des erzeugten oder umgesetzten Steuerungskommandos von der ersten Netzübergangseinrichtung in Form des SMS Application Gateways (7) des keine Paketdatenvermittlung ermöglichenden Mobilfunknetzes an eine zweite Netzübergangseinrichtung in Form eines Application Gateways des Mobilfunknetzes mit dem nur paketvermittelnden Zugangsnetz;
d) Autorisieren des Mobilfunkteilnehmers (1) gegenüber einer Einrichtung (TAS, HSS) des Mobilfunknetzes mit dem nur paketvermittelnden Zugangsnetz seitens der zweiten Netzübergangseinrichtung in Form des Application Gateways des Mobilfunknetzes mit dem nur paketvermittelnden Zugangsnetz mittels der den Mobilfunkteilnehmer (1) identifizierenden Daten; und
e) Ausführen des Steuerungskommandos seitens der Einrichtung (TAS, HSS) des Mobilfunknetzes mit dem nur paketvermittelnden Zugangsnetz mittels der zweiten Netzübergangseinrichtung in Form des Application Gateways des Mobilfunknetzes mit dem nur paketvermittelnden Zugangsnetz bei erfolgreicher Autorisierung,
wobei die in der seitens der ersten Netzübergangseinrichtung in Form des SMS Application Gateways (7) des keine Paketdatenvermittlung ermöglichenden Mobilfunknetzes empfangenen Kurznachricht - SMS - enthaltenen Informationen zur Steuerung des Dienstmerkmals des dem Mobilfunkteilnehmer (1) in einem Mobilfunknetz mit dem nur paketvermittelnden Zugangsnetz zur Verfügung gestellten Dienstes subscriber controlled input-kodierte, SCI-kodierte, Informationen sind.

2. Verfahren nach Anspruch 1, **gekennzeichnet durch** ein Steuerungskommando, welches
- ein Auslesen von Daten über aktuelle Einstellungen von Dienstmerkmalen aus der Einrichtung (TAS, HSS) des Mobilfunknetzes mit dem nur paketvermittelnden Zugangsnetz durch die zweite Netzübergangseinrichtung in Form des Application Gateways des Mobilfunknetzes mit dem nur paketvermittelnden Zugangsnetz,
- ein Übermitteln der ausgelesenen Daten von der zweiten Netzübergangseinrichtung in Form des Application Gateways des Mobilfunknetzes mit dem nur paketvermittelnden Zugangsnetz an die erste Netzübergangseinrichtung in Form des SMS Application Gateways (7) des keine Paketdatenvermittlung ermöglichenden Mobilfunknetzes,
- ein Erzeugen oder Umsetzen einer Kurznachricht - SMS - an den Mobilfunkteilnehmer (1) aus den ausgelesenen Daten seitens der ersten Netzübergangseinrichtung in Form des SMS Application Gateways (7) des keine Paketdatenvermittlung ermöglichenden Mobilfunknetzes, und
- ein Senden der erzeugten oder umgesetzten Kurznachricht - SMS - von der ersten Netzübergangseinrichtung in Form des SMS Application Gateways (7) an den Mobilfunkteilnehmer (1)
bewirkt.

3. Verfahren nach Anspruch 2, **dadurch gekennzeichnet, dass** das Auslesen und Übermitteln der Daten mittels oder als XML Configuration Access Protocol-Nachricht, XCAP-Nachricht, erfolgt.

4. Verfahren nach einem der Ansprüche 1 bis 3, **dadurch gekennzeichnet, dass** aus und/oder mit der seitens der ersten Netzübergangseinrichtung in Form des SMS Application Gateways (7) des keine Paketdatenvermittlung ermöglichenden Mobilfunknetzes empfangenen Kurznachricht - SMS - seitens der ersten Netzübergangseinrichtung in Form des SMS Application Gateways (7) des keine Paketdatenvermittlung ermöglichenden Mobilfunknetzes eine XML Configuration Access Protocol-Nachricht, XCAP-Nachricht, erzeugt wird oder aus und/oder mit einer seitens der ersten Netzübergangseinrichtung in Form des SMS Application Gateways (7) des keine Paketdatenvermittlung ermöglichenden Mobilfunknetzes empfangenen XCAP-Nachricht seitens der ersten Netzübergangseinrichtung in Form des SMS Application Gateways (7) des keine Paketdatenvermittlung ermöglichenden Mobilfunknetzes eine Kurznachricht - SMS - erzeugt wird.

5. Erste Netzübergangseinrichtung in Form eines SMS Application Gateways (7) in einem keine Paketdatenvermittlung ermöglichenden Mobilfunknetz, umfassend
- Mittel zum Empfangen einer Kurznachricht - SMS - von einem Mobilfunkteilnehmer (1), wobei die Kurznachricht - SMS - den Mobilfunkteilnehmer (1) identifizierende Daten und Informationen zur Steuerung eines Dienstmerkmals eines dem Mobilfunkteilnehmer (1) in einem Mobilfunknetz mit einem nur paketvermittelnden Zugangsnetz zur Verfügung gestellten Dienstes aufweist,
- Mittel zum Erzeugen oder Umsetzen eines Kommandos zur Steuerung des Dienstmerkmals des in dem Mobilfunknetz mit dem nur paketvermittelnden Zugangsnetz zur Verfügung gestellten Dienstes aus und/oder mit den Steuerungsinformationen der empfangenen Kurznachricht - SMS -, und
- Mittel zum Übermitteln der den Mobilfunkteilnehmer (1) identifizierenden Daten und des erzeugten oder umgesetzten Steuerungskommandos an eine zweite Netzübergangseinrichtung in Form eines Application Gateways des Mobilfunknetzes mit dem nur paketvermittelnden Zugangsnetz,
wobei die in der seitens der ersten Netzübergangseinrichtung in Form des SMS Application Gateways (7) des keine Paketdatenvermittlung ermöglichenden Mobilfunknetzes empfangenen Kurznachricht - SMS - enthaltenen Informationen zur Steuerung des Dienstmerkmals des dem Mobilfunkteilnehmer (1) in einem Mobilfunknetz mit dem nur paketvermittelnden Zugangsnetz zur Verfügung gestellten Dienstes subscriber controlled input-kodierte, SCI-kodierte, Informationen sind.

6. Erste Netzübergangseinrichtung in Form eines SMS Application Gateways (7) nach Anspruch 5, **gekennzeichnet durch**
- Mittel zum Empfangen von Daten von einer zweiten Netzübergangseinrichtung in Form des Application Gateways des Mobilfunknetzes mit dem nur paketvermittelnden Zugangsnetz,
- Mittel zum Erzeugen oder Umsetzen einer Kurznachricht - SMS - an den Mobilfunkteilnehmer (1) aus den von der zweiten Netzübergangseinrichtung in Form des Application Gateways des Mobilfunknetzes mit dem nur paketvermittelnden Zugangsnetz empfangenen Daten, und
- Mittel zum Senden der erzeugten oder umgesetzten Kurznachricht - SMS - an den Mobilfunkteilnehmer (1).

7. Erste Netzübergangseinrichtung in Form eines SMS Application Gateways (7) nach Anspruch 5 oder Anspruch 6, **gekennzeichnet durch** Mittel zur Wandlung oder Umsetzung einer Kurznachricht - SMS - in eine XML Configuration Access Protocol-Nachricht, XCAP-Nachricht, und/oder zur Wandlung oder Umsetzung einer XCAP-Nachricht in eine Kurznachricht - SMS-.

## Claims

1. A method for controlling service features of services made available to mobile subscribers (1) in mobile radio networks,
comprising the following process steps:
a) receiving a first short message - SMS - from a mobile subscriber (1) in a first gateway device in the form of an SMS application gateway (7) of a mobile radio network which does not enable any packet data transfer, wherein the short message - SMS - comprises data which identify the mobile subscriber (1) and information for controlling a service feature of a service that is made available to the mobile subscriber (1) in a mobile radio network having an only packet transferring access network;
b) generating or realizing a command for controlling the service feature of the service made available in the mobile radio network having the only packet transferring access network on the base or by means of the control information of the received short message - SMS - by means of the first gateway device in the form of the SMS application gateway (7) of the mobile radio network that does not enable any packet data transfer;
c) transmitting the data which identify the mobile subscriber and the generated or realized control command from the first gateway device in the form of the SMS application gateway (7) of the mobile radio network that does not enable any packet data transfer to a second gateway device in the form of the application gateway of the mobile radio network having the only packet transferring access network;
d) authorising the mobile subscriber (1) with respect to a device (TAS, HSS) of the mobile radio network having the only packet transferring access network by the second gateway device in the form of the application gateway of the mobile radio network having the only packet transferring access network by means of the data which identify the mobile subscriber (1); and
e) executing the control command by the device (TAS, HSS) of the mobile radio network having the only packet transferring access network by means of the second gateway device in the form of the application gateway of the mobile radio network having the only packet transferring access network in case of a successful authorization,
wherein the information for controlling the service feature of the service made available to the mobile subscriber (1) in a mobile radio network having the only packet transferring access network, which information is contained in the short message - SMS - received by the first gateway device in the form of the SMS application gateway (7) of the mobile radio network which does not enable any packet data transfer, is subscriber controlled input encoded, SCI-encoded, information.

2. A method according to claim 1, **characterized by** a control command which causes
- data concerning current settings of service features to be read out of the device (TAS, HSS) of the mobile radio network having the only packet transferring access network by means of the second gateway device in form of the application gateway of the mobile radio network having the only packet transferring access network,
- the read out data to be transmitted from the second gateway device in form of the application gateway of the mobile radio network having the only packet transferring access network to the first gateway device in form of the SMS application gateway (7) of the mobile radio network which does not enable any packet data transfer,
- a short message - SMS - to the mobile subscriber (1) to be generated or realized from the read out data by means of the first gateway device in form of the SMS application gateway (7) of the mobile radio network which does not enable any packet data transfer, and
- the generated or realized short message - SMS - to be sent from the first gateway device in form of the SMS application gateway (7) to the mobile subscriber (1).

3. A method according to claim 2, **characterized in that** the data are read out and transmitted by or as an XML configuration access protocol message, XCAP message.

4. A method according to one of the claims 1 to 3, **characterized in that** an XML configuration access protocol message, XCAP message, will be produced by means of the first gateway device in form of the SMS application gateway (7) of the mobile radio network which does not enable any packet data transfer on the base or by means of the short message - SMS - received by the first gateway device in form of the SMS application gateway (7) of the mobile radio network which does not enable any packet data transfer or a short message - SMS - will be produced by means of the first gateway device in form of the SMS application gateway (7) of the mobile radio network which does not enable any packet data transfer on the base or by means of an XCAP message received by the first gateway device in form of the SMS application gateway (7) of the mobile radio network which does not enable any packet data transfer.

5. A first gateway device in form of an SMS application gateway (7) in a mobile radio network which does not enable any packet data transfer, comprising
- means for receiving a short message - SMS - from a mobile subscriber (1), wherein the short message - SMS - comprises data which identify the mobile subscriber (1) and information for controlling a service feature of a service that is made available to the mobile subscriber (1) in a mobile radio network having an only packet transferring access network,
- means for generating or realizing a command for controlling the service feature of the service made available in the mobile radio network having the only packet transferring access network on the base or by means of the control information of the received short message - SMS -, and
- means for transmitting the data which identify the mobile subscriber (1) and the generated or realized control command to a second gateway device in the form of an application gateway of the mobile radio network having the only packet transferring access network,
wherein the information for controlling the service feature of the service made available to the mobile subscriber (1) in a mobile radio network having the only packet transferring access network, which information is contained in the short message - SMS - received by the first gateway device in the form of the SMS application gateway (7) of the mobile radio network which does not enable any packet data transfer, is subscriber controlled input encoded, SCI-encoded, information.

6. A first gateway device in form of an SMS application gateway (7) according to claim 5, **characterized by**
- means for receiving data from a second gateway device in form of the application gateway of the mobile radio network having the only packet transferring access network,
- means for generating or realizing a short message - SMS - to the mobile subscriber (1) on the base of the data received from the second gateway device in form of the application gateway of the mobile radio network having the only packet transferring access network, and
- means for sending the generated or realized short message - SMS - to the mobile subscriber (1).

7. A first gateway device in form of an SMS application gateway (7) according to claim 5 or claim 6, **characterized by** means for converting or transposing a short message - SMS - into an XML configuration access protocol message, XCAP message, and/or for converting or transposing an XCAP message into a short message - SMS -.

## Revendications

1. Procédé de commande de caractéristiques de service des services fournis à des abonnés mobiles (1) dans des réseaux radio mobile,
comprenant les étapes de procédé suivantes de:
a) recevoir un premier message court - SMS - d'un abonné mobile (1) dans un premier dispositif de passerelle en forme d'une passerelle d'application SMS (7) d'un réseau radio mobile, qui ne permet pas de transmission de données par parquets, dans lequel le message court - SMS - comprend des données, qui identifient l'abonné mobile (1) et des informations pour commander un caractéristique de service d'un service fourni à l'abonné mobile (1) dans un réseau radio mobile ne comprenant qu'un réseau d'accès à commutation de paquets;
b) générer ou réaliser une instruction de commande du caractéristique de service du service fourni dans le réseau radio mobile ne comprenant que le réseau d'accès à commutation de paquets sur la base et/ou par moyen des informations de commande du message court - SMS - reçu, par moyen du premier dispositif de passerelle en forme de la passerelle d'application SMS (7) du réseau radio mobile, qui ne permet pas de transmission de données par parquets;
c) transmettre les données, qui identifient l'abonné mobile, et l'instruction de commande générée ou réalisée à partir du premier dispositif de passerelle en forme de la passerelle d'application SMS (7) du réseau radio mobile, qui ne permet pas de transmission de données par parquets à un deuxième dispositif de passerelle en forme d'une passerelle d'application du réseau radio mobile ne comprenant que le réseau d'accès à commutation de paquets;
d) autoriser l'abonné mobile (1) par rapport à un dispositif (TAS, HSS) du réseau radio mobile ne comprenant que le réseau d'accès à commutation de paquets par le deuxième dispositif de passerelle en forme d'une passerelle d'application du réseau radio mobile ne comprenant que le réseau d'accès à commutation de paquets par moyen des données, qui identifient l'abonné mobile (1); et
e) exécuter l'instruction de commande par le dispositif (TAS, HSS) du réseau radio mobile ne comprenant que le réseau d'accès à commutation de paquets par moyen du deuxième dispositif de passerelle en forme d'une passerelle d'application du réseau radio mobile ne comprenant que le réseau d'accès à commutation de paquets dans le cas d'une autorisation avec succès,
dans lequel les informations pour commander le caractéristique de service du service fourni à l'abonné mobile (1) dans un réseau radio mobile ne comprenant que le réseau d'accès à commutation de paquets, lesquelles informations sont contenues dans le message court - SMS - reçu par le premier dispositif de passerelle en forme de la passerelle d'application SMS (7) du réseau radio mobile, qui ne permet pas de transmission de données par parquets, sont des informations codées par entrée commandée par l'abonné (subscriber controlled input), codées par SCI.

2. Procédé selon la revendication 1, **caractérisé par** une instruction de commande, qui provoque
- une lecture de données concernant les réglages actuels de caractéristiques de service dans le dispositif (TAS, HSS) du réseau radio mobile ne comprenant que le réseau d'accès à commutation de paquets par moyen du deuxième dispositif de passerelle en forme de la passerelle d'application du réseau radio mobile ne comprenant que le réseau d'accès à commutation de paquets,
- une transmission des données lues du deuxième dispositif de passerelle en forme de la passerelle d'application du réseau radio mobile ne comprenant que le réseau d'accès à commutation de paquets au premier dispositif de passerelle en forme de la passerelle d'application SMS (7) du réseau radio mobile, qui ne permet pas de transmission de données par parquets,
- une génération ou une réalisation d'un message court - SMS - à l'abonné mobile (1) à partir des données lues par moyen du premier dispositif de passerelle en forme de la passerelle d'application SMS (7) du réseau radio mobile, qui ne permet pas de transmission de données par parquets, et
- un envoi du message court - SMS - généré ou réalisé à partir du premier dispositif de passerelle en forme de la passerelle d'application SMS (7) à l'abonné mobile (1).

3. Procédé selon la revendication 2, **caractérisé en ce que** la lecture et la transmission des données se font par moyen de ou comme message de protocole d'accès de configuration XML, à savoir un message XCAP.

4. Procédé selon l'une des revendications 1 à 3, **caractérisé en ce qu'**un message de protocole d'accès de configuration XML, à savoir un message XCAP, est créé par moyen du premier dispositif de passerelle en forme de la passerelle d'application SMS (7) du réseau radio mobile, qui ne permet pas de transmission de données par parquets, sur la base ou par moyen du message court - SMS - reçu par le premier dispositif de passerelle en forme de la passerelle d'application SMS (7) du réseau radio mobile, qui ne permet pas de transmission de données par parquets ou un message court - SMS - est créé par moyen du premier dispositif de passerelle en forme de la passerelle d'application SMS (7) du réseau radio mobile, qui ne permet pas de transmission de données par parquets, sur la base ou par moyen d'un message XCAP reçu par le premier dispositif de passerelle en forme de la passerelle d'application SMS (7) du réseau radio mobile, qui ne permet pas de transmission de données par parquets.

5. Premier dispositif de passerelle en forme d'une passerelle d'application SMS (7) dans un réseau radio mobile, qui ne permet pas de transmission de données par parquets, comprenant
- des moyens pour recevoir un message court - SMS - d'un abonné mobile (1), dans lequel le message court - SMS - comprend des données, qui identifient l'abonné mobile (1) et des informations pour commander un caractéristique de service d'un service fourni à l'abonné mobile (1) dans un réseau radio mobile ne comprenant qu'un réseau d'accès à commutation de paquets,
- des moyens pour générer ou réaliser une instruction de commande du caractéristique de service du service fourni dans le réseau radio mobile ne comprenant que le réseau d'accès à commutation de paquets sur la base et/ou par moyen des informations de commande du message court - SMS - reçu, et
- des moyens pour transmettre les données, qui identifient l'abonné mobile, et l'instruction de commande générée ou réalisée à un deuxième dispositif de passerelle en forme d'une passerelle d'application du réseau radio mobile ne comprenant que le réseau d'accès à commutation de paquets,
dans lequel les informations pour commander le caractéristique de service du service fourni à l'abonné mobile (1) dans un réseau radio mobile ne comprenant que le réseau d'accès à commutation de paquets, lesquelles informations sont contenues dans le message court - SMS - reçu par le premier dispositif de passerelle en forme de la passerelle d'application SMS (7) du réseau radio mobile, qui ne permet pas de transmission de données par parquets, sont des informations codées par entrée commandée par l'abonné (subscriber controlled input), codées par SCI.

6. Premier dispositif de passerelle en forme d'une passerelle d'application SMS (7) selon la revendication 5, **caractérisé par**
- des moyens pour recevoir des données d'un deuxième dispositif de passerelle en forme de la passerelle d'application du réseau radio mobile ne comprenant que le réseau d'accès à commutation de paquets,
- des moyens pour générer ou réaliser un message court - SMS - à l'abonné mobile (1) à partir des données reçues par le deuxième dispositif de passerelle en forme de la passerelle d'application du réseau radio mobile ne comprenant que le réseau d'accès à commutation de paquets, et
- des moyens pour envoyer le message court généré ou réalisé - SMS - à l'abonné mobile (1).

7. Premier dispositif de passerelle en forme d'une passerelle d'application SMS (7) selon la revendication 5 ou le revendication 6, **caractérisé par** des moyens pour convertir ou transposer un message court - SMS - en un message de protocole d'accès de configuration XML, à savoir un message XCAP, et/ou pour convertir ou transposer Un message XCAP en un message court - SMS -.
